# EUROPEAN PATENT APPLICATION

(11) **EP 0 828 109 A1**
(43) Date of publication of application: **11.03.1998**
(21) Application number: 96119687.0
(22) Date of filing: 09.12.1996
(51) Int. Cl.: F16L 41/10, F16L 37/00, F16L 55/07, F16K 27/00, F24H 9/20

(54) **A system for the support and leakproof connection of a valve unit, particularly for gas**

(30) Priority: 06.09.1996 IT PD960215
(71) Applicant: SIT LA PRECISA S.r.l., I-35129 Padova (IT)
(72) Inventor: Previato, Armando, 35100 Padova (IT)
(74) Representative: Cantaluppi, Stefano

(57) **Abstract**

In order to connect a valve unit (1), particularly for gas, in a leakproof manner to a first pipe (3) and to a second pipe (4), one of the pipes is arranged to be connected to the unit by means of a spigot-and-socket joint (10) and the other pipe is arranged to be connected by means of a fixed connection with the interposition of first and second coupling elements on the valve unit (1) and on a support (2) thereof, respectively, the coupling elements being shaped so as to engage one another with form coupling and to be held in a condition of mutual engagement by the fixed connection of the second pipe (4) so as to lock the valve unit (1) relative to the support (2) and to oppose the disconnection of the spigot-and-socket joint (10) between the unit (1) and the first pipe (3).

## Description

The subject of the present invention is a system for the support and leakproof connection of a valve unit, particularly for gas, according to the preamble to the main claim.

Within the specific field of the invention it is desirable for at least one of the pipes by which the valve unit is connected to a gas main and to a burner,respectively, to be fixed to the valve unit by means of a spigot-and-socket joint. The advantage achieved is that the joint is easy to form both on the valve unit and on the pipe and is also easy to assemble with a good guarantee of being leakproof. However, there is the problem that these joints have poor mechanical resistance to disconnection and it is therefore necessary to provide for further measures which achieve the desired mechanical retention. Typically, the pipe which is connected to the valve unit by means of the spigot-and-socket joint is made stationary relative to the unit by being anchored to the support or to a structural portion of the boiler with which both the unit and the support are associated. The valve unit in turn is clamped to the support, for example, by means of fixing screws. This type of mounting adequately solves the mechanical problem but inevitably involves the need to fix the valve unit and its support together by means of screws or similar devices.

This complicates the mounting of the valve unit on the boiler or other user with which it is associated.

The technical problem addressed by the invention is that of providing a system which is designed structurally and functionally so as to solve all of the problems complained of with reference to the prior art mentioned.

This problem is solved by the invention by a system for the support and leakproof connection of a valve unit formed in accordance with the following claims.

The characteristics and advantages of the invention will become clearer from the detailed description of a preferred embodiment thereof, described by way of non-limiting example with reference to the appended drawings, in which:

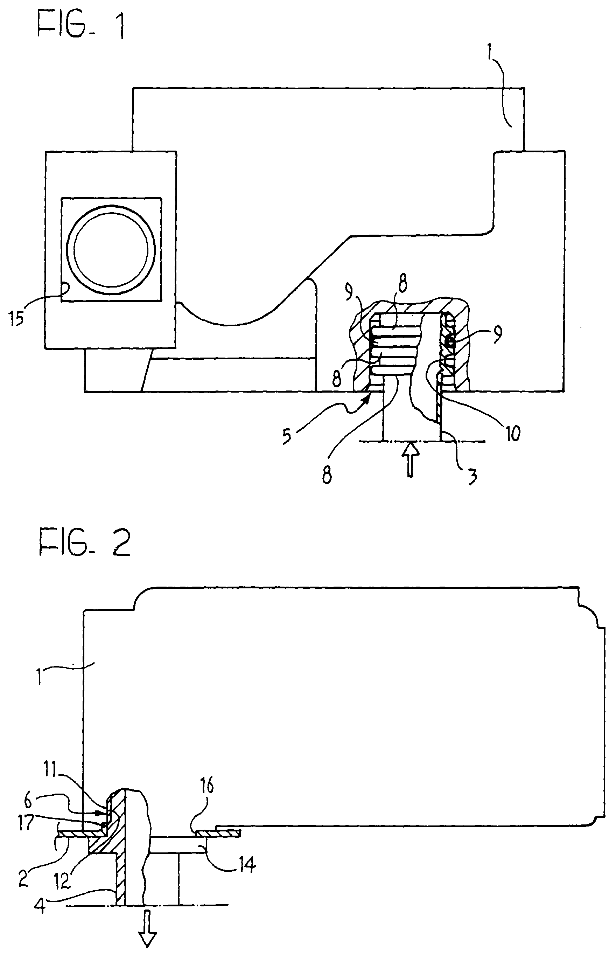

Figure 1 is a partially-sectioned, schematic front elevational view of a system according to the invention,
Figure 2 is a partially-sectioned plan view of the system of Figure 1.

With reference to the drawings indicated, the system of the invention comprises a valve unit, generally indicated 1, a support 2 for supporting it inside a boiler or other gas user, not shown, and a first, gas-supply pipe 3 and a second, gas-delivery pipe 4 of the valve 1.

The pipes 3, 4 are connected to the valve unit by first and second connections, generally indicated 5 and 6, respectively.

The first connection 5 is a spigot-and-socket joint with a male coupling element formed at the free end of the pipe 3 by the formation of a plurality of parallel, spaced-apart, radial corrugations 8 between which recesses are defined for O-ring type seals 9, and with a female coupling element or socket 10 in the form of a cylindrical seat in the body of the valve unit 1.

This coupling achieves a good hydraulic seal but is not very resistant to disconnection. In order to improve this resistance, the pipe 3 is fixed to the support 2 or to structural elements fixed thereto by clamping means, not shown, and the support is in turn fixed to the valve unit 1 in the manner explained below.

The second connection 6 is a threaded coupling and can achieve a fixed connection, which is releasable, with a screw thread 11 formed on the end of the pipe 4 and a threaded seat 12 formed in the valve unit 1. The pipe 4 also has a flange 14 which abuts the support 2, pushing it against the body of the valve unit 1 when the screw 11 is tightened in the threaded seat 12.

The valve unit 1 has a recess 15 in the form of a polygonal (square in the embodiment shown) depression around the threaded seat 12; a corresponding lip 17 on the support 2, adjacent a hole 16 for the passage of the pipe 4, projects towards the recess 15 in order to adopt a position against one of its walls so as to lock the valve unit, preventing its rotation relative to the support. Since the pipes 3, 4 are arranged with crossed axes, the locking of the support 2 against rotation relative to the unit 1 opposes disconnection of the pipe 3 from the female engagement element 10, thus ensuring the mechanical strength of the joint in an axial direction.

The invention thus solves the problem set, achieving many advantages. Amongst these is the fact that the locking of the valve unit against rotation relative to the support is achieved by the tightening of the second connection means with the interposition of the support between the valve unit and the flange of the second connection. Further fixing operations by means of screws or other accessories are thus eliminated. It should be understood that the recess 15 and the lip 17 may be of another shape; for example, instead of the lip, it is possible to provide appendages or projections on the support and corresponding recesses in the valve unit in order to achieve the desired locking.

## Claims

1. A system for the support and leakproof connection of a valve unit (1), particularly for gas, comprising at least a first pipe (3) and a second pipe (4) connected to the valve unit (1) in a leakproof manner by means of first and second connection means (5, 6), respectively, and a valve-unit support (2) which is substantially stationary relative to the first pipe (3), in which the first connection means comprise a spigot-and-socket joint (10), and in which a fixed connection is provided between the unit (1) and the support (2), characterized in that the fixed connection comprises first and second coupling elements on the valve unit (1) and on the support (2), respectively, the coupling elements being shaped so as to engage one another with form coupling in order to bring about locking between the support (2) and the valve unit (1), and being held in a condition of mutual engagement by the second connection means (6) so as to lock the valve unit (1) relative to the support (2) and oppose the disconnection of the spigot-and-socket joint (10).

2. A system according to Claim 1, in which the connection means (5, 6) are disposed on crossed axes on the valve unit (1) and the form coupling is such as to lock the unit (1) against rotation on the support (2).

3. A system according to Claim 1 or Claim 2, in which the coupling elements comprise a projection (17) and a recess (15) disposed on the support (2) and on the second attachment means (6), respectively, and having cross-sections which are conjugate along at least part of their respective outlines.

4. A system according to one or more of the preceding claims, in which the recess (15) and the projection (17) have polygonal cross-sections.

5. A system according to one or more of the preceding claims, in which the second connection means (6) comprise a seat (12) in the valve unit and a flange (14) on the pipe (4), the support (2) being interposed between the unit (1) and the flange (14), the recess (15) comprising a polygonal depression extending around the seat (12) and the projection comprising a lip (17) projecting into the seat (12) from the support (2), the lip (17) being held in engagement with the corresponding recess (15) by the flange (14).
